# FASCICULE DE BREVET EUROPEEN

(11) **EP 3 599 397 B1**
(45) Date de publication et mention de la délivrance du brevet: **07.07.2021**
(21) Numéro de dépôt: 19188233.1
(22) Date de dépôt: 25.07.2019
(51) Int. Cl.: F16H 57/04, F02C 7/36, F16H 57/08

(54) **DISPOSITIF DU TYPE REDUCTEUR OU DIFFERENTIEL POUR UNE TURBOMACHINE D'AERONEF**
VORRICHTUNG VOM TYP UNTERSETZUNGS- ODER DIFFERENZIALGETRIEBE FÜR EIN TURBOTRIEBWERK EINES LUFTFAHRZEUGS
REDUCER OR DIFFERENTIAL TYPE DEVICE FOR A TURBINE ENGINE OF AN AIRCRAFT

(30) Priorité: 26.07.2018 FR 1856983
(43) Date de publication de la demande: 29.01.2020
(73) Titulaire: Safran Transmission Systems, 92700 Colombes (FR)
(72) Inventeur: DI GIOVANNI, Jean-Charles, Michel, Pierre, 77550 MOISSY-CRAMAYEL (FR); SIMON, Adrien, Louis, 77550 MOISSY-CRAMAYEL (FR)
(74) Mandataire: Gevers & Orès

(56) Documents cités:
- EP-A1- 3 159 578
- WO-A1-2014/184583
- JP-A- 2009 144 533
- US-A1- 2015 377 343

## Description

### Domaine de l'invention

La présente invention concerne le domaine des réducteurs de vitesse ou des différentiels mécaniques pour une turbomachine en particulier d'aéronef.

### Etat de la technique

L'état de l'art comprend notamment les documents WO-A1-2010/092263, FR-A1-2 987416, US-A1-2015/377343, WO-A1-2014/184583, EP-A1-3 159 578, JP-A-2009 144533 et FR-A1-3 041 054.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs planétaire et (à train) épicycloïdal qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages en tant que réducteur.

Lorsque le porte-satellites est fixe en rotation, le solaire et la couronne sont menant et mené, respectivement, ou inversement. Le réducteur est alors du type « planétaire ».

Dans le cas inverse, le plus fréquent, d'un réducteur à train épicycloïdal, la couronne extérieure est fixe en rotation et le solaire et le porte-satellites sont menants et menés.

Cette même structure peut être utilisée pour réaliser un différentiel mécanique. Dans ce cas, les trois composants (solaire, satellites et couronne) sont mobiles en rotation.

Cependant, ce type de réducteur ou différentiel présente des inconvénients liés à sa lubrification.

Dans la technique actuelle, un satellite est en général guidé en rotation par un palier lisse qui s'étend autour d'un support tubulaire du porte-satellites, ce support tubulaire comportant une cavité interne de réception d'huile et des orifices sensiblement radiaux traversants de passage d'huile depuis la cavité interne jusqu'au palier lisse.

La chaleur générée par le passage des éléments mobiles d'un roulement doit être évacuée au plus vite en limitant au maximum sa recirculation. La recirculation d'une huile chaude et sale ne permet pas l'évacuation des calories et comporte un risque de d'usure prématurée des pièces ainsi que de cokéfaction.

La présente invention propose un perfectionnement à cette technologie avec une solution simple, efficace et économique pour optimiser la lubrification des paliers.

### Exposé de l'invention

L'invention concerne un dispositif du type réducteur ou différentiel pour une turbomachine d'aéronef, comportant un solaire central d'axe X de rotation, une couronne s'étendant autour de l'axe X et du solaire, et un porte-satellites de support d'une rangée annulaire de satellites disposés entre le solaire et la couronne, et engrenés avec le solaire et la couronne, les satellites ayant des axes de rotation Y sensiblement parallèles audit axe X, ledit solaire comportant des moyens d'accouplement à un premier arbre de la turbomachine et au moins l'un parmi le porte-satellites et la couronne comportant des moyens de liaison à un autre arbre de la turbomachine, chacun desdits satellites étant guidé en rotation par au moins un palier s'étendant autour d'un support tubulaire d'axe Y dudit porte-satellites, ce support tubulaire comportant une cavité interne de réception d'huile et des orifices sensiblement radiaux traversants de passage d'huile depuis ladite cavité interne jusqu'audit au moins un palier, au moins deux paliers étant montés coaxialement et de manière adjacente autour dudit support et comportant des rangées annulaires de roulements maintenus dans des cages qui ont sensiblement le même diamètre et dont les bords périphériques en regard sont conformés pour guider l'huile alimentant les paliers radialement vers l'extérieur par rapport audit axe Y, lesdites cages étant caractérisées en ce que lesdits bords périphériques comportent chacun une portion ou surface tronconique et/ou un rebord annulaire d'extrémité qui s'étend radialement vers l'extérieur.

Le dispositif peut ainsi être un réducteur du type planétaire ou épicycloïdal ou bien un différentiel mécanique. Les paliers des satellites sont à roulements et l'invention propose d'optimiser la forme des cages de ces roulements afin d'optimiser l'écoulement de l'huile de lubrification des paliers qui, du fait des forces centrifuges en fonctionnement, est dirigé radialement de l'intérieur vers l'extérieur par rapport à l'axe Y, puis par rapport à l'axe X. L'invention permet ainsi de limiter la recirculation de l'huile en fonctionnement afin d'améliorer l'évacuation de la chaleur générée et la performance du dispositif.

Le dispositif selon l'invention peut comprendre une ou plusieurs des caractéristiques suivantes, selon les revendications annexes:
- trois paliers sont montés coaxialement et de manière adjacente autour dudit support ; le nombre de paliers n'est ainsi pas limitatif ; plus leur nombre augmente, et plus il est envisageable de réduire leurs dimensions radiales et donc leur encombrement radial, au détriment toutefois de leur encombrement axial puisqu'ils sont ici disposés axialement les uns à côté des autres pour former une ou plusieurs rangées,
- les deux bords périphériques du palier situé entre les deux autres paliers, comportent chacun une portion ou surface tronconique ; dans le cas de l'utilisation de trois paliers adjacents, la cage du palier central peut ainsi être différente des cages des paliers latéraux puisqu'elle doit guider l'huile à chacune de ses extrémités axiales,
- la portion ou surface tronconique est reliée à un rebord annulaire d'extrémité qui s'étend radialement vers l'extérieur ; ce rebord permet de guider l'huile jusqu'au plus près de la bague externe des paliers et donc de réduire la distance radiale destinée à être parcourue par les gouttes d'huile qui sont projetées sur cette bague en fonctionnement ; le rebord permet en outre de rigidifier la cage limitant ses déflexions sous charge ; enfin, le rebord permet de limiter la transition des particules d'une rangée de roulements à une autre, ce qui limite l'usure des pièces et la cokéfaction de l'huile,

- les bords périphériques en regard sont situés à une distance axiale l'un de l'autre qui est inférieure ou égal au diamètre desdites orifices ; les bords périphériques en regard définissent ainsi entre eux un conduit annulaire de passage d'huile qui aurait la même fonction qu'une rangée annulaire d'orifices de passage d'huile,
- ladite distance axiale est la distance séparant les rebords annulaires d'extrémité des bords périphériques en regard ; cela permet de faciliter la maîtrise précise de la distance inter-cage,
- les cages ont un diamètre externe maximal défini par les extrémités radialement externes desdits rebords annulaires d'extrémité ; leur encombrement radial est ainsi défini par ces rebords,
- les extrémités radialement externes desdits rebords annulaires d'extrémité sont écartés d'un jeu radial prédéterminé de surfaces cylindriques internes de plus petit diamètre dudit satellite, ces surfaces formant des pistes intérieures de roulement desdits paliers,
- lesdites surfaces cylindriques internes dudit satellite sont séparées l'une de l'autre par une rainure annulaire au fond de laquelle sont formés des perçages de passage d'huile,
- les bords périphériques en regard sont situés à une distance axiale l'un de l'autre qui est inférieure ou égale au diamètre desdites orifices,
- ladite distance axiale est la distance séparant les rebords annulaires d'extrémité des bords périphériques en regard,
- le support comprend des nervures annulaires radialement externes qui définissent entre elles d'une part des rainures annulaires externes de réception des roulements et d'autre part au moins une gorge annulaire externe entourée par lesdits bords périphériques en regard, au moins certains desdits orifices s'étendant de préférence jusqu'aux extrémités libres radialement externes de ces nervures ; on comprend ainsi que les bagues internes des paliers sont formées d'une seule pièce avec le support annulaire, ce qui est avantageux et simplifie le montage.

La présente invention concerne en outre une turbomachine d'aéronef, caractérisée en ce qu'elle comprend au moins un dispositif tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue en coupe axiale d'un réducteur de vitesse,
- la figure 3 est une vue écorchée en perspective du réducteur,
- la figure 4 est une vue en coupe d'un dispositif du type réducteur ou différentiel, dont les paliers de guidage des satellites sont à roulements,
- la figure 5 est une vue en coupe d'un dispositif du type réducteur ou différentiel, selon un mode de réalisation de l'invention,
- la figure 6 est une vue de détail à plus grande échelle d'une partie de la figure 5,
- la figure 7 est une vue en coupe et en perspective d'une partie du dispositif de la figure 5 ;
- la figure 8 est une vue similaire à celle de la figure 5 et montrant le cheminement de l'huile de lubrification en fonctionnement, et
- la figure 9 est une vue similaire à celle de la figure 5 et illustrant une variante de réalisation de l'invention.

### Description détaillée d'un mode de réalisation de l'invention

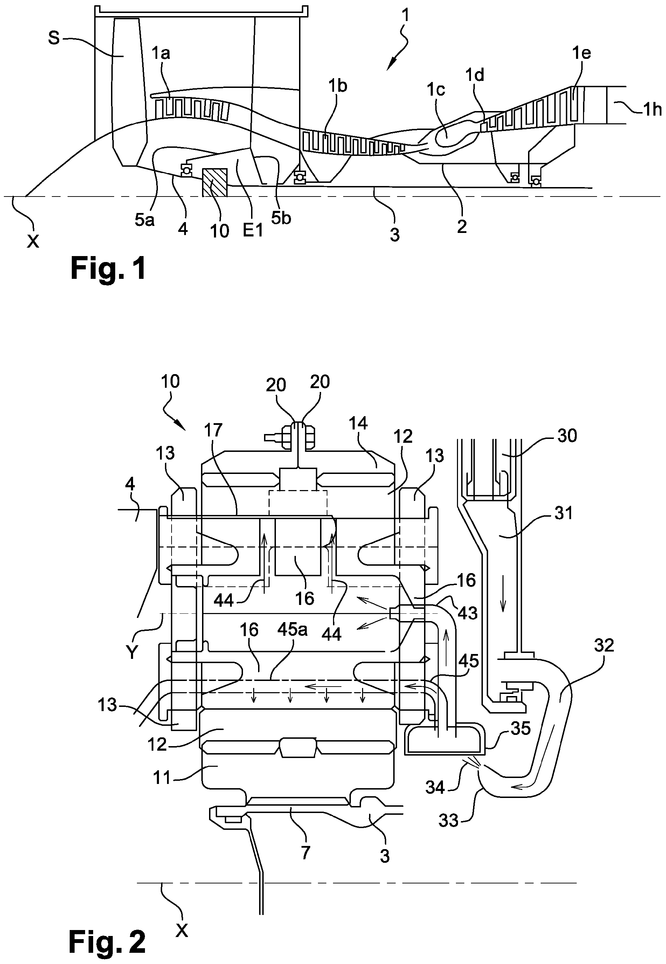

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former une enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2987416.

Le réducteur 10 embraye d'une part sur l'arbre BP 3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et sept. Les satellites 12 tournent aussi autour de l'axe X de la turbomachine sauf dans le cas d'un planétaire où ils tournent uniquement autour de leurs axes de révolution Y, en engrenant sur une denture interne chevron de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe Y défini par un support tubulaire 16 porté par le porte-satellite 13, à l'aide d'un palier 17 qui est en général lisse dans la technique actuelle.

La rotation des satellites 12 autour de l'axe Y, du fait de la coopération de leurs dentures avec la denture de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

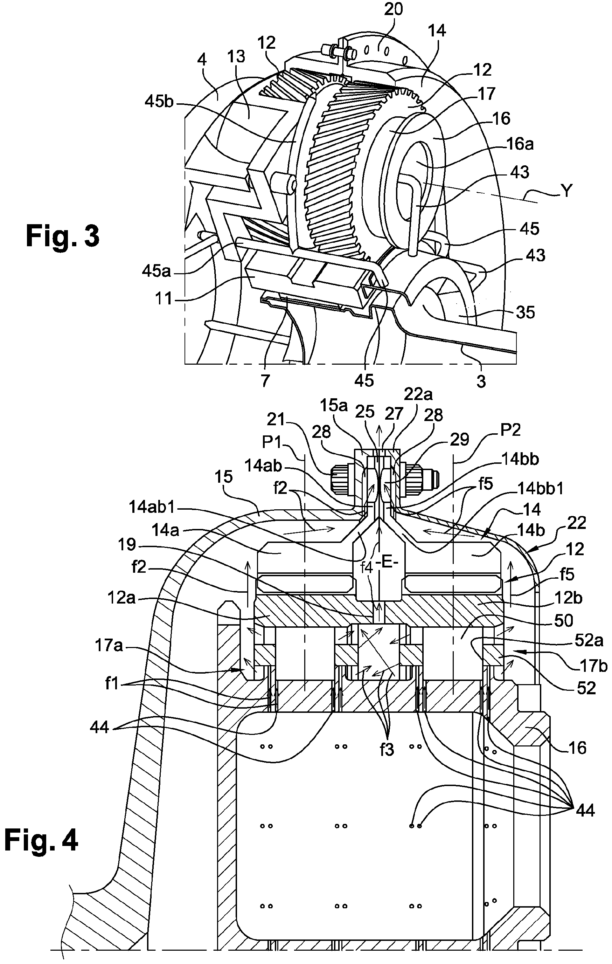

La figure 2 montre, avec la figure 3, l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon 31 lié à la structure fixe de la turbomachine, jusqu'aux pignons et aux paliers 17 à lubrifier.

Le dispositif de lubrification comporte schématiquement trois parties qui vont être décrites ci-après successivement, une première partie liée à la structure fixe et délivrant l'huile vers les parties tournantes du réducteur 10, un rouet tournant avec le porte-satellites 13 réceptionnant cette huile, et des circuits de distribution d'huile alimentés en huile par le rouet pour l'acheminer vers les endroits à lubrifier. La première partie comporte au moins un injecteur 32 dont l'extrémité calibrée est resserrée pour former un gicleur 33. L'huile est amenée vers l'injecteur par une canalisation d'acheminement 30, en provenance du réservoir du moteur (non représenté). Un réservoir tampon 31 peut être interposé à côté du réducteur 10 sur la canalisation, de préférence en partie haute de façon à ce que l'huile puisse s'écouler vers le centre du réducteur par gravité. Le gicleur 33 éjecte l'huile sous la forme d'un jet 34, qui se forme sous la pression produite conjointement par la pompe d'alimentation (non représentée) et par le poids de la colonne d'huile située au-dessus de lui. Le gicleur 33 est positionné ici radialement à l'intérieur du porte-satellites 13 par rapport à l'axe X et le jet 34 est orienté avec une composante radiale dirigée vers l'extérieur du réducteur 10. En référence à la figure 3, le rouet de réception de l'huile lié au porte-satellites 13 comporte essentiellement une coupelle cylindrique, ici à section en U, dont l'ouverture en U est orientée en direction de l'axe de rotation X. Le rouet est agencé sur le porte-satellites 13 de manière à ce que le fond du U de la coupelle 35 recueille le jet d'huile 34 éjecté par le gicleur 33.

Les circuits de distribution d'huile sont ici de deux types. Une première série de circuits de distribution d'huile correspond à des premières canalisations 43, qui sont réparties régulièrement sur la circonférence du réducteur 10 et en nombre égal à celui des satellites 12. Ces canalisations 43 partent radialement de la coupelle 35 et pénètrent dans la cavité interne 16a de chaque support 16, qui est refermée par le porte-satellites 13. L'huile qui circule dans les premières canalisations 43 pénètre dans la cavité interne 16a puis passe, du fait de la force centrifuge, dans des orifices 44, qui traversent chaque support 16 en étant orientés radialement. Ces orifices 44 débouchent à la périphérie des supports 16, au niveau des paliers supportant les pignons des satellites 12 et assurent ainsi la lubrification de ces paliers. La deuxième série de circuits de distribution d'huile comprend des secondes canalisations 45 qui cheminent, depuis la coupelle 35 entre les satellites 12 et se divisent en plusieurs canaux 45a, 45b. Les canaux 45a, 45b acheminent l'huile vers les engrenages formés par les pignons des satellites 12 et le solaire 11, d'une part, et les pignons des satellites 12 et la couronne externe 14, d'autre part. Chaque canal 45a s'étend axialement le long des pignons d'un satellite 12, entre ceux-ci et le solaire 11, et forme une rampe de lubrification sur toute la largeur des pignons. Le canal 45b, qui alimente l'engrenage entre la couronne 14 et les pignons des satellites 12, projette son huile au centre du cylindre formé par chaque satellite 12. Comme représenté, chaque satellite 12 est réalisé sous la forme de deux pignons parallèles qui engrènent respectivement avec deux demi-couronnes de la couronne 14 (figure 3). Les hélices de la denture de chaque satellite sont orientées en diagonale par rapport à l'axe Y de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur.

Bien que la description qui précède concerne un réducteur du type planétaire ou épicycloïdal, elle s'applique à un différentiel mécanique dans lequel les trois composants, que sont le porte-satellites 13, la couronne 14 et le solaire 11, sont mobiles en rotation, la vitesse de rotation de l'un de ces composants dépendant de la différence de vitesses des deux autres composants notamment.

La figure 4 montre le cas où les satellites 12 d'un dispositif du type réducteur ou différentiel sont centrés et guidés en rotation sur les supports tubulaires 16 du porte-satellites 13, par un palier à une ou plusieurs rangées d'éléments roulants 17a, 17b. Les rangées d'éléments roulants 17a, 17b sont appelées « paliers » dans ce qui suit.

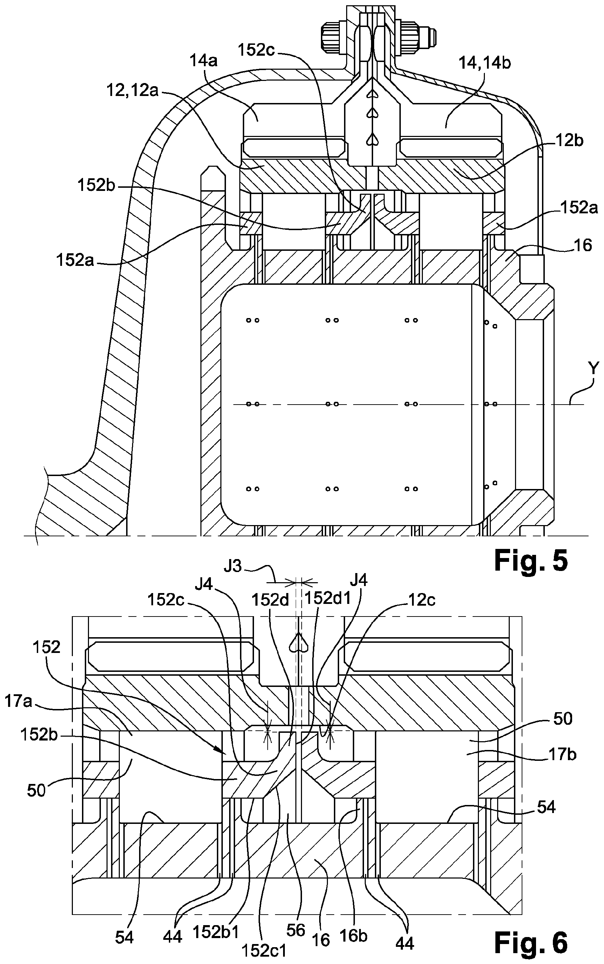

Sur les exemples des figures 4 et 5, chaque support 16 est entouré par les deux paliers 17a, 17b qui sont à rouleaux dans l'exemple représenté. Dans notre exemple, chaque palier 17a, 17b est associé à une hélice 12a, 12b de la denture chevron du satellite 12 qui est lui-même engrené avec deux demi-couronnes 14a, 14b, comme évoqué dans ce qui précède. Autrement dit, les paliers 17a, 17b sont coaxiaux et disposés l'un à côté de l'autre, chaque palier étant situé dans un plan médian P1, P2 passant sensiblement par le plan médian de chaque hélice 12a, 12b du pignon satellite 12 et par le plan médian de l'hélice d'une demi-couronne 14a ou 14b. Les plans P1 et P2 sont parallèles entre eux et perpendiculaires à l'axe Y. Le nombre de paliers 17a, 17b peut être différent à l'exemple présenté. Il ne dépend pas obligatoirement du nombre d'hélices 12a, 12b, 14a, 14b d'une denture chevron.

Chaque palier 17a, 17b comprend une rangée annulaire de roulements 50 (rouleaux) agencée dans une cage 52 qui est formée par un anneau cylindrique comportant une rangée annulaire de lumières 52a traversantes de réception des roulements. Les cages 52 sont indépendantes et écartées axialement l'une de l'autre. Dans le cas illustré dans les dessins, les bagues ou pistes interne et externe de chaque palier sont formées d'une seule pièce avec le support 16, d'une part, et le satellite 12, d'autre part.

Comme on le voit à la figure 4, les paliers 17a, 17b sont à distance axiale l'un de l'autre. C'est également le cas des hélices 12a, 12b du pignon satellite 12 et des hélices des demi-couronnes 14a, 14b. Les hélices 12a, 12b sont reliées par un voile cylindrique de matière qui comprend une rangée annulaire de perçages radiaux 19 nécessaires à l'écoulement de l'huile en fonctionnement pour ne pas avoir de perçage dans la denture chevron.

Chaque demi-couronne 14a, 14b comprend un corps annulaire de forme générale cylindrique et relié à une bride annulaire 14ab, 14bb s'étendant radialement vers l'extérieur. Chaque corps comprend une hélice interne. Bien que cela ne soit pas visible sur les dessins, les hélices des demi-couronnes, sont complémentaires des hélices 12a, 12b du satellite, qui sont elles du type représenté à la figure 3. Les hélices des deux demi-couronnes 14a, 14b sont ainsi en chevron.

Le corps de chaque demi-couronne est relié par une de ses extrémités longitudinales à la bride 14ab, 14bb correspondante par l'intermédiaire d'un rebord annulaire 14ab1, 14bb1.

Chaque bride 14ab, 14bb s'étend sensiblement en direction radiale et est en appui sur l'autre bride dans un plan de joint sensiblement radial. Les rebords 14ab1, 14bb1 ont ici une forme générale tronconique et convergent ici l'un vers l'autre radialement vers l'extérieur.

Les brides 14ab, 14bb servent à fixer les demi-couronnes 14a, 14b entre elles, ainsi qu'à un porte-couronne 15 et à un récupérateur d'huile 22 dans l'exemple représenté.

Pour cela, les brides 14ab, 14bb comprennent chacune une rangée annulaire d'orifices axiaux traversants de passage de moyens de fixation 21 du type vis-écrou ou analogues. Les orifices des brides sont alignés et reçoivent les moyens de fixation 21.

Le porte-couronne 15 comprend également une bride annulaire 15a de fixation aux brides 14ab, 14bb. La bride 15a est appliquée axialement sur l'une des brides 14ab, 14bb, à savoir ici la bride 14ab dans l'exemple représenté. La bride 14ab est ainsi intercalée axialement entre la bride 15a et la bride 14bb. L'inverse est aussi possible.

La bride 15a comprend des orifices alignés avec les orifices des brides 14ab, 14bb et qui reçoivent également les moyens de fixation 21, dont des têtes peuvent être appliquées axialement sur la face amont de la bride 15a et des écrous peuvent être appliqués axialement sur la face aval de la bride 14bb ou inversement. Dans l'exemple représenté, une bride 22a du récupérateur annulaire 22 d'huile est en appui axial sur la bride 14bb et reçoit sur sa face aval les têtes des écrous. La bride 22a comprend des orifices alignés avec les orifices des brides 14ab, 14bb, 15a et qui reçoivent également les moyens de fixation 21.

Les rebords 14ab1, 14bb1 délimitent un espace annulaire E qui a ici une section de forme générale triangulaire, dont la pointe est orientée radialement vers l'extérieur.

Du fait de la forme des rebords 14ab1, 14bb1 et de leur liaison aux extrémités longitudinales, respectivement aval et amont, des corps des demi-couronnes, ces corps sont écartés axialement l'un de l'autre d'une distance prédéterminée.

La distance axiale inter-hélices 12a, 12b peut être dû à une contrainte de fabrication. Chaque satellite comporte une piste intérieure de roulement. Pour réduire la surface précise à usiner au juste besoin, cette surface cylindrique intérieure est divisée en plusieurs pistes de largeur axiale réduite dont le nombre est égal au nombre de paliers 17a, 17b. Cela permet d'obtenir une rainure annulaire 12c de récupération d'huile entre les pistes, de diminuer la masse car le satellite subit moins de contraintes à cet endroit et de diminuer la difficulté de réalisation sur des éléments demandant une très grande précision car plusieurs pistes sont réalisées indépendamment les unes des autres et la surface totale de grande précision est plus petite avec les rainures entre chaque piste. Les perçages 19 sont formés au fond de cette rainure 12c.

L'huile de lubrification est destinée à s'écouler en fonctionnement à travers l'espace inter-corps E. Des passages sensiblement radiaux sont prévues entre les brides 14ab, 14bb afin d'autoriser l'évacuation de l'huile radialement vers l'extérieur de la couronne 14.

Les passages d'huile sont ici formés d'une part par des lunules 25 sensiblement radiales formées dans les surfaces en regard des brides 14ab, 14bb. Chaque bride 14ab ,14bb comprend une rangée annulaire de lunules 25 alignées axialement avec des lunules 25 de l'autre des brides. Les lunules sont réalisées à distance des orifices de passage des moyens de fixation 21. Chaque lunule a par exemple en section une forme semi-circulaire (demi-oblongue) ou rectangulaire.

Les lunules 25 sont en communication fluidique, à leurs extrémités radialement internes, avec l'espace E, et à leurs extrémités axialement externes avec des encoches 27 de sortie d'huile prévues sur des rebords cylindriques situés à la périphérie externes des brides 15a, 22a (figure 4).

Des passages d'huile sont en outre formés par des lunules 28 sensiblement radiales formées dans les surfaces d'appui des brides 22a, 15a (figure 4). Chaque bride 22a, 15a comprend une rangée annulaire de lunules 28. Les lunules 28 sont réalisées à distance des orifices de passage des moyens de fixation 21 et communiquent avec des orifices traversants 29 prévus au fond des lunules 25 des brides 14ab, 14bb. Chaque lunule a par exemple en section une forme semi-circulaire (demi-oblongue) ou rectangulaire.

L'huile qui traverse les orifices 44 du support 16 (flèches f1), lubrifie les paliers 17a, 17b et doit ensuite s'écouler radialement à l'extérieur de ceux-ci. La lubrification va servir à refroidir les éléments roulants ainsi que la cage 52. Une fois les éléments refroidis, la lubrification se retrouve sur l'un des trois chemins possibles :
- Chemin N°1 - flèches f2
   L'huile de lubrification est éjectée du côté avant du réducteur (ou par l'extrémité gauche du roulement sur le dessin), et remonte dans le porte-couronne 15 jusqu'aux lunules 28 ; elle est ensuite transférée via les orifices 29 entre les brides 14ab, 14bb des demi-couronnes pour se retrouver éjectée par les encoches 27 ;
- Chemin N°2 - flèches f3 et f4
   L'huile de lubrification est piégée entre les paliers 17a, 17b ; à l'aide des effets centrifuges, de la gravité et de la ventilation, l'huile de lubrification se retrouve dans la rainure circulaire 12c située entre les deux pistes intérieures de roulage (flèches f3) puis sort du satellite 12 via les perçages 19 pour arriver dans l'espace E formé par les deux demi-couronnes assemblées (flèches f4) ; au bout de cette cavité se trouve les lunules 25 et les encoches 27 pour l'éjection de l'huile du réducteur par l'effet centrifuge de la couronne en rotation ;
- Chemin N°3 - flèches f5
   L'huile de lubrification est éjectée du côté arrière du réducteur (ou par l'extrémité droite du roulement sur le dessin), et remonte dans le récupérateur d'huile 22 jusqu'aux lunules 28 ; elle est ensuite transférée via les orifices 29 de la bride de la demi-couronne arrière pour se retrouver éjectée par la voie centrale formée par les encoches 27 des deux demi-couronnes assemblées.

Dans le cas représenté à la figure 4, l'écoulement de l'huile depuis les orifices 44 jusqu'à l'espace E n'est pas optimisé. L'huile du chemin N°2 risque de stagner et de diminuer l'efficacité de lubrification et de refroidissement des paliers 17a, 17b. Les cages 52 des paliers 17a, 17b comprennent des bords périphériques en regard qui sont identiques et à distance axiale l'un de l'autre, et qui ne sont pas adaptés au guidage de l'huile en fonctionnement.

Les figures 5 à 9 illustrent deux modes de réalisation de l'invention. Cette invention s'applique à un réducteur ou différentiel tel que décrit dans ce qui précède.

Le dispositif de la figure 5 diffère de celui décrit dans ce qui précède essentiellement par la forme de ses cages 152. Contrairement aux cages 52 de la figure 4 qui présentent une symétrie par rapport au plan médian P1 ou P2 correspondant, la cage 152 de chaque palier ne présente pas une telle symétrie.

Chaque cage 152 est formée par un anneau dont un bord périphérique axial 152a est cylindrique et dont l'autre bord périphérique axial 152b comprend une surface ou portion tronconique ou murale 152c. Le détail à plus grande échelle de la figure 5 permet de voir que le bord 152b comprend une portion tronconique 152c qui se termine à son extrémité libre par un rebord annulaire 152d orienté radialement vers l'extérieur. La portion 152c comprend une surface tronconique interne 152c1 de guidage d'huile, qui s'étend entre une surface cylindrique interne 152b1 du bord 152b et une surface radiale 152d1 du rebord 152d. Dans une variante non représentée, le bord 152b pourrait comprendre seulement une partie cylindrique qui se terminerait par un rebord annulaire 152d orienté radialement vers l'extérieur ; elle ne comprendrait dans ce cas pas de portion tronconique 152c.

Les bords 152b des cages 152 des paliers 17a, 17b sont en regard l'un de l'autre et à une distance prédéterminée l'un de l'autre, de façon à maîtriser le jeu axial J3 entre les (surfaces 152d1 des) rebords 152. Ce jeu J3 peut être inférieur ou égal au diamètre des orifices 44. Le jeu J3 doit être suffisamment large pour laisser passer le débit d'huile qui passe par le chemin N°2 précité.

Comme évoqué dans ce qui précède, ces orifices 44 traversent radialement la paroi tubulaire du support 16. Dans l'exemple représenté, le support 16 comprend des nervures annulaires 16b radialement externes qui définissent entre eux d'une part des rainures annulaires externes 54 de réception des roulements 50 et d'autre part une gorge annulaire externe 56 entourée par les bords périphériques 152b en regard. Les nervures 16b servent ainsi de butées axiales aux éléments roulants des paliers 17a, 17b. Au moins certains des orifices 44 s'étendent jusqu'aux extrémités libres radialement externes des nervures 16b.

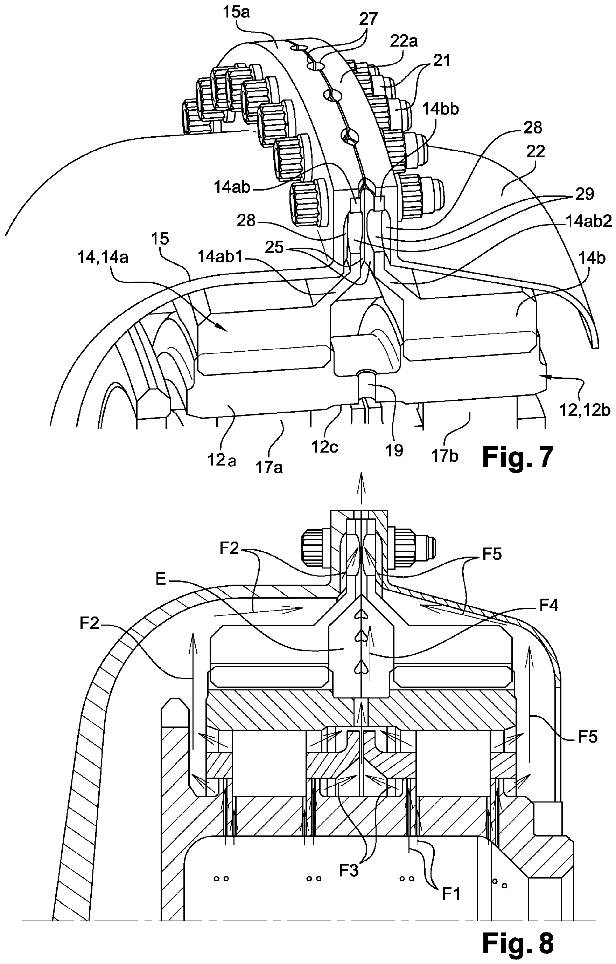

L'écoulement de l'huile depuis les orifices 44 (flèches F1) est assuré par les surfaces tronconiques 152c1 et le jeu J3, qui guident l'huile jusqu'aux perçages 19 et à l'espace E (flèches F3 et F4 de la figure 8). Les autres chemins (N°1 et 3 - flèches F2 et F5) sont identiques à ceux décrits dans ce qui précède.

Les cages 152 ont un diamètre externe maximal défini par les extrémités radialement externes des rebords 152d. Ce diamètre est fonction du diamètre interne des hélices 12a, 12b de sorte que la distance radiale à parcourir par l'huile entre les cages 152 et le satellite 12 soit la plus petite possible. Avantageusement, il existe un jeu radial J4 prédéterminé de montage entre les extrémités radialement externes des rebords 152d et les surfaces cylindriques internes de plus petit diamètre du satellite 12 (figure 6). Ces surfaces forment les pistes intérieures des paliers 17a, 17b.

Dans l'exemple représenté, le plan de joint des brides 14ab, 14bb des demi-couronnes passe par les axes des perçages 19 et au milieu entre les cages 152. Les perçages 19 débouchent radialement vers l'intérieur dans la rainure 12c et les rebords 152d sont orientés radialement vers l'extérieur vers la rainure 12c. Ces rebords sont ici écartés axialement des pistes de roulement des paliers 17a, 17b. Les rebords annulaires 152d forment un muret dont la première fonction est de guider l'huile des paliers 17a, 17b dans la rainure annulaire 12c du satellite 12 et dont la deuxième fonction est d'empêcher la transition d'huile d'un palier 17a à un autre palier 17b.

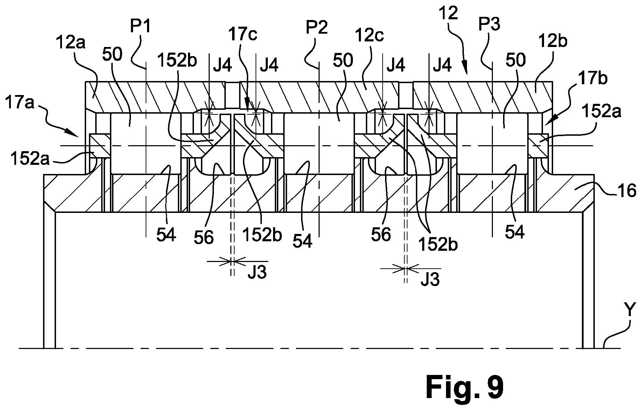

Le dispositif de la figure 9 illustre une variante à trois paliers 17a, 17b, 17c montés coaxialement et de manière adjacente autour du support 16. Les paliers 17a et 17b sont similaires à ceux décrits dans ce qui précède et sont disposés de part et d'autre d'un troisième palier 17c, appelé palier central ou intermédiaire. Ce palier 17c a des bords périphériques 152b, à portion tronconique, qui sont identiques et qui sont conformés pour assurer le guidage de l'huile avec les bords périphériques 152b en regard des deux autres paliers 17a, 17b. Contrairement aux paliers 17a, 17b, le palier 17c comprend donc un plan médian de symétrie P3.

Ce type de guidage à trois paliers peut être utilisé pour un satellite 12 à trois hélices 12a, 12b, 12c, chaque palier étant associé à un pignon et aligné radialement avec ce pignon dans un plan médian P1, P2 ou P3.

## Revendications

1. Dispositif du type réducteur (10) ou différentiel pour une turbomachine (1) d'aéronef, comportant un solaire central (11) d'axe X de rotation, une couronne (14) s'étendant autour de l'axe X et du solaire, et un porte-satellites (13) de support d'une rangée annulaire de satellites (12) disposés entre le solaire et la couronne, et engrenés avec le solaire et la couronne, les satellites ayant des axes de rotation Y sensiblement parallèles audit axe X, ledit solaire comportant des moyens (7) d'accouplement à un arbre (3) de la turbomachine et au moins l'un parmi le porte-satellites et la couronne comportant des moyens de liaison à un autre arbre (4) de la turbomachine, chacun desdits satellites étant guidé en rotation par au moins un palier (17) s'étendant autour d'un support tubulaire (16) d'axe Y dudit porte-satellites, ce support tubulaire comportant une cavité interne (16a) de réception d'huile et des orifices (44) sensiblement radiaux traversants de passage d'huile depuis ladite cavité interne jusqu'audit au moins un palier, au moins deux paliers (17a, 17b) étant montés coaxialement et de manière adjacente autour dudit support et comportant des rangées annulaires de roulements (50) maintenus dans des cages (152) qui ont sensiblement le même diamètre et dont les bords périphériques (152b) en regard sont conformés pour guider l'huile alimentant les paliers radialement vers l'extérieur par rapport audit axe Y, lesdites cages étant **caractérisées en ce que** lesdits bords périphériques (152b) comportent chacun une portion ou surface tronconique (152c, 152c1) et/ou un rebord annulaire d'extrémité (152d) qui s'étend radialement vers l'extérieur.

2. Dispositif selon la revendication 1, dans lequel trois paliers (17a, 17b, 17c) sont montés coaxialement et de manière adjacente autour dudit support (16).

3. Dispositif selon la revendication 2, dans lequel les deux bords périphériques (152b) du palier (17c) situé entre les deux autres paliers (17a, 17b), comportent chacun une portion ou surface tronconique (152c, 152c1).

4. Dispositif selon l'une des revendications précédentes, dans lequel les cages (152) ont un diamètre externe maximal défini par les extrémités radialement externes desdits rebords annulaires d'extrémité (152d).

5. Dispositif selon la revendication précédente, dans lequel les extrémités radialement externes desdits rebords annulaires d'extrémité (152d) sont écartés d'un jeu radial (J4) prédéterminé de surfaces cylindriques internes de plus petit diamètre dudit satellite (12), ces surfaces formant des pistes intérieures de roulement desdits paliers (17a, 17b).

6. Dispositif selon la revendication précédente, dans lequel lesdites surfaces cylindriques internes dudit satellite (12) sont séparées l'une de l'autre par une rainure annulaire (12c) au fond de laquelle sont formés des perçages (19) de passage d'huile.

7. Dispositif selon l'une des revendications précédentes, dans lequel les bords périphériques (152b) en regard sont situés à une distance axiale (J3) l'un de l'autre qui est inférieure ou égale au diamètre desdites orifices (44).

8. Dispositif selon la revendication précédente, dans lequel ladite distance axiale (J3) est la distance séparant les rebords annulaires d'extrémité (152d) des bords périphériques (152b) en regard.

9. Dispositif selon l'une des revendications précédentes, dans lequel le support (16) comprend des nervures annulaires radialement externes (16b) qui définissent entre elles d'une part des rainures annulaires externes (54) de réception des roulements (50) et d'autre part au moins une gorge annulaire externe (56) entourée par lesdits bords périphériques (152b) en regard, au moins certains desdits orifices (44) s'étendant de préférence jusqu'aux extrémités libres radialement externes de ces nervures.

10. Turbomachine d'aéronef, **caractérisée en ce qu'**elle comprend au moins un dispositif selon l'une des revendications précédentes.

## Patentansprüche

1. Vorrichtung vom Typ eines Reduktors (10) oder Differentials für eine Flugzeug-Turbomaschine (1), die ein zentrales Sonnenrad (11) mit der Drehachse X, einer Radkranz (14), der sich um die Achse X und das Sonnenrad herum erstreckt, und einen Planetenträger (13) zum Tragen einer ringförmigen Reihe von Planetenrädern (12) umfasst, die zwischen dem Sonnenrad und dem Radkranz angeordnet sind und mit dem Sonnenrad und dem Radkranz in Eingriff stehen, wobei die Planetenräder Drehachsen Y aufweisen, die im Wesentlichen zur Achse X parallel sind, wobei das Sonnenrad Mittel (7) zum Kuppeln mit einer Welle (3) der Turbomaschine umfasst, und wobei mindestens eines aus dem Planetenträger und dem Radkranz Mittel zum Verbinden mit einer anderen Welle (4) der Turbomaschine umfasst, wobei jedes der Planetenräder von mindestens einem Lager (17), das sich um einen rohrförmigen Träger (16) mit der Achse Y des Planetenträgers herum erstreckt, drehgeführt wird, wobei dieser rohrförmige Träger einen Innenhohlraum (16a) zum Aufnehmen von Öl und im Wesentlichen radiale Durchgangsöffnungen (44) für den Durchtritt von Öl aus dem Innenhohlraum bis zu dem mindestens einen Lager umfasst, wobei mindestens zwei Lager (17a, 17b) koaxial und benachbart um den Träger herum angebracht sind und ringförmige Reihen von Rollen (50) umfassen, die in Käfigen (152) gehaltenen werden, welche im Wesentlichen den gleichen Durchmesser aufweisen und deren gegenüberliegende Umfangskanten (152b) so ausgestaltet sind, dass sie das Öl, das die Lager versorgt, in Bezug auf die Achse Y radial nach außen führen, wobei die Käfige **dadurch gekennzeichnet sind, dass** die Umfangskanten (152b) je eine(n) kegelstumpfförmige(n) Abschnitt oder Fläche (152c, 152c1) und/oder einen ringförmigen Endrand (152d) umfassen, der sich radial nach außen erstreckt.

2. Vorrichtung nach Anspruch 1, wobei drei Lager (17a, 17b, 17c) koaxial und benachbart um den Träger (16) herum angebracht sind.

3. Vorrichtung nach Anspruch 2, wobei die zwei Umfangskanten (152b) des Lagers (17c), das zwischen den zwei anderen Lagern (17a, 17b) liegt, je eine(n) kegelstumpfförmige(n) Abschnitt oder Fläche (152c, 152c1) umfassen.

4. Vorrichtung nach einem der vorstehenden Ansprüche, wobei die Käfige (152) einen maximalen Außendurchmesser aufweisen, der durch die radial außenliegenden Enden der ringförmigen Endränder (152d) definiert ist.

5. Vorrichtung nach dem vorstehenden Anspruch, wobei die radial außenliegenden Enden der ringförmigen Endränder (152d) um ein vorbestimmtes radiales Spiel (J4) von zylinderförmigen Innenflächen kleineren Durchmessers des Planetenrades (12) beabstandet sind, wobei diese Flächen innere Rollbahnen der Lager (17a, 17b) bilden.

6. Vorrichtung nach dem vorstehenden Anspruch, wobei die zylinderförmigen Innenflächen des Planetenrades (12) durch eine ringförmige Nut (12c), an deren Boden Bohrungen (19) für den Durchtritt von Öl gebildet sind, voneinander getrennt sind.

7. Vorrichtung nach einem der vorstehenden Ansprüche, wobei die gegenüberliegenden Umfangskanten (152b) in einem axialen Abstand (J3) zueinander liegen, der kleiner oder gleich dem Durchmesser der Öffnungen (44) ist.

8. Vorrichtung nach dem vorstehenden Anspruch, wobei es sich bei dem axialen Abstand (J3) um den Abstand handelt, der die ringförmigen Endränder (152d) der gegenüberliegenden Umfangskanten (152b) trennt.

9. Vorrichtung nach einem der vorstehenden Ansprüche, wobei der Träger (16) radial außenliegende ringförmige Rippen (16b) umfasst, die zwischen sich zum einen ringförmige Außennuten (54) zum Aufnehmen der Rollen (50), und zum anderen mindestens eine ringförmige Außenkehle (56) definieren, die von den gegenüberliegenden Umfangskanten (152b) umgeben ist, wobei sich mindestens einige der Öffnungen (44) vorzugsweise bis zu den radial außenliegenden freien Enden dieser Rippen erstrecken.

10. Flugzeug-Turbomaschine, **dadurch gekennzeichnet**, das sie mindestens eine Vorrichtung nach einem der vorstehenden Ansprüche umfasst.

## Claims

1. Device of the reduction gear (10) type or of the differential type for a turbine engine (1) of an aircraft, comprising a central sun gear (11) with a rotation axis X, a ring gear (14) extending about the axis X and the sun gear, and a planetary carrier (13) supporting an annular row of planet gears (12) arranged between the sun gear and the ring gear, and engaged with the sun gear and the ring gear, the planet gears having rotation axes Y substantially parallel to said axis X, said sun gear comprising means for coupling (7) to a first shaft (3) of the turbine engine, and at least one of the planetary carrier and the ring gear comprising connection means to another shaft (4) of the turbine engine, each of said planet gears being rotationally guided by at least one bearing (17) extending about a tubular support (16) with an axis Y of said planetary carrier, said tubular support comprising an inner cavity (16a) to receive oil and substantially radial through-orifices (44) for the passage of oil from said inner cavity to said at least one bearing, at least two bearings (17a, 17b) being mounted coaxially and adjacently around said support and comprise annular rows of roller bearings (50) maintained in cages (152) that have substantially the same diameter and of which the facing peripheral edges (152b) are shaped to guide the oil supplying the bearings radially outwards with respect to said axis Y, said cages being **characterised in that** said peripheral edges (152b) each comprises a frusto-conical portion or surface (152c, 152c1) and/or an annular end rim (152d) that extends radially outwards.

2. Device according to claim 1, wherein three bearings (17a, 17b, 17c) are mounted coaxially and in an adjacent manner around the support (16).

3. Device according to claim 2, wherein the two peripheral edges (152b) of the bearing (17c) located between the two other bearings (17a, 17b) each comprise a frusto-conical portion or surface (152c, 152c1).

4. Device according to one of the preceding claims, wherein the cages (152) have a maximum outer diameter defined by the radially external ends of said annular end rims (152d).

5. Device according to the preceding claims, wherein the radially external ends of said annular end rims (152d) are offset by a predetermined radial clearance (J4) from the smallest diameter internal cylindrical surfaces of said planet gear (12), these surfaces forming inner tracks for the rollers of said bearings (17a, 17b).

6. Device according to the preceding claim, wherein said internal cylindrical surfaces of said planet gear (12) are separated from one another by an annular groove (12c) at the bottom of which are formed boreholes (19) for the passage of oil.

7. Device according to one of the preceding claims, wherein the facing peripheral edges (152b) are located at an axial distance (J3) from one another that is less than or equal to the diameter of said orifices (44).

8. Device according to the preceding claim, wherein said axial distance (J3) is the distance separating the annular end rims (152d) of the facing peripheral edges (152b).

9. Device according to one of the preceding claims, wherein the support (16) comprises radially external ribs (16b) that together define, on the one hand, the external annular grooves (54) receiving the roller bearings (50) and on the other hand, at least one outer annular recess (56) surrounded by said facing peripheral edges (152b), at least some of said orifices (44) extending preferably to the radially external free ends of these ribs.

10. Turbine engine of an aircraft, **characterised in that** it comprises at least one device according to the preceding claims.
